# EUROPEAN PATENT SPECIFICATION

(11) **EP 2 307 621 B1**
(45) Date of publication and mention of the grant of the patent: **08.08.2012**
(21) Application number: 09762045.4
(22) Date of filing: 09.06.2009
(51) Int. Cl.: E02D 17/20

(54) **A METHOD FOR CONSOLIDATING TERRAIN AT RISK OF LANDSLIDE AND A PLANT FOR IMPLEMENTING THE METHOD**
VERFAHREN ZUR KONSOLIDIERUNG EINES ERDRUTSCHGEFÄHRDETEN BODENS UND ANLAGE ZUR IMPLEMENTIERUNG DES VERFAHRENS
PROCÉDÉ DE CONSOLIDATION D'UN TERRAIN MENACÉ PAR UN GLISSEMENT DE TERRAIN ET ÉQUIPEMENT POUR METTRE EN UVRE LE PROCÉDÉ

(30) Priority: 10.06.2008 IT BO20080367
(43) Date of publication of application: 13.04.2011
(73) Proprietor: Lega Rocciatori S.R.L. Di Aloi Pasquale, 60127 Ancona (IT)
(72) Inventor: ALOI, Aristodemo, I-71100 Foggia (IT)
(74) Representative: Dall'Olio, Giancarlo
(86) International application number: PCT/IB2009/005891
(87) International publication number: WO 2009/150515

(56) References cited:
- EP-A- 0 857 415
- CH-A5- 678 739
- CH-A5- 696 851
- DE-U1- 9 212 454
- DE-U1- 9 215 568
- FR-A- 2 615 542

## Description

### TECHNICAL FIED

The invention relates to a method and a plant for consolidating terrain, and is destined for use in stabilising unstable land inclines.

### BACKGROUND ART

As is known, the consolidation of land slopes at risk of landslides has for some time been achieved by installing plants of the reinforced-net type. These plants comprise a plurality of nets made of galvanised steel wire mesh arranged to cover the surface of the unstable land. These nets are fastened to anchoring points with the aid of rectangular or rhomboid plates fastened to a bar by means of a nut, and by steel cables. The anchorings are preferably constituted by threaded steel bars set into special holes filled with concrete. This type of realisation, used at present, has not however been demonstrated to be sufficiently effective. Following numerous failures (the terrain slides unrestrainedly below the net and the bars in the places where the angle of escarpment increases), research has mainly focussed on the technological development of new types of net, with the aim of realising a product which can passively resist localised stress, even of very high entity, as is required due to the fact that the plants at present in use are passive; in any case, the prior art is working within the same concepts as before. In particular, in installation of the nets a new system has been introduced which means the use of reinforcing cables can be avoided. This method is interesting for its applicational simplicity but bases its entire stabilising effect on the compression ability of the anchoring plates on the underlying land. But as the plants are essentially two-dimensional (we might Imagine an inclined plane covered by a net), the nets are simply rested on the terrain and the plates, though tightened to 2-3 quintals as recommended, are tightened, uselessly, against the foundation concrete of the threaded rods, producing only minimal and random effects on the land. There is therefore no element in the system which has an active effect against the onset of the landslide phenomenon, if not the mechanical opposition of the threaded bars of the anchorings, which however have a mechanical resistance index of less than 1%, i.e. of very little importance. These plants, though using very resistant nets, are also essentially two-dimensional and also are subject to landslides below the net and between the bars.

A second problem of known-type plants is the phenomenon known as "push-down" so that at onset of the landslide phenomenon the considerable pressure exerted by the terrain on the anchoring means of the plant causes downward flexion of the plant, thus nearing the respective upper ends to the anchoring means located one row further downwards. This leads to loss of tension in the net, and the cables too, if present, slacken on the terrain, losing all containing function. The terrain that is no longer contained slides below the net and pushes against the following line of anchoring means, bending them valley-wards in the same way as the previous line and starting off a chain reaction which propagates up to the base of the landslide. This phenomenon obtains especially when the unstable layer exhibits a considerable height (2 or 3 metres), making the use of anchoring means of 5 or 6 metres long necessary, of which 2-3 metres are inserted in the terrain. For this reason, with traditional passive plants it is highly inadvisable to intervene on slopes having a too-high unstable layer of terrain (more than 2 metres), as the push-down phenomenon would cause total destruction.

A third unsolved problem is the removal of the terrain by rainfall and atmospheric agents which cause the nets to empty out and enable the land to slide below the net and between the bars. A method for consolidating terrain at risk of landslide according to the preamble of claim 1 is disclosed in FR 2 615 542 A.

### SUMMARY OF INVENTION

The aim of the present invention is to resolve the cited problems, by providing a method for consolidation of terrain at risk of landslide which is able not just to contain but indeed to prevent an onset of a landslide.

A further aim of the invention is to provide a plant for consolidation of the terrain at risk of landslide which is based on a simple concept, the functioning of which is utterly reliable and versatile in use, immediately effective, of low environmental impact, long-lasting and maintenance-free.

The above aims are all attained according to what is reported in the claims.

### BRIEF DESCRIPTION OF THE DRAWINGS

The characteristics of the invention are illustrated in the following description, made with reference to the figures of the drawings, in which:
figure 1 is a longitudinal cross section of an incline with a landslide occurring, on which a consolidating plant of tradition type is installed;
figure 2 is a longitudinal section of a landsliding incline on which the consolidating plant of the invention has been installed;
figure 3 is a schematic axonometric view of the surface of a landsliding incline on which the consolidating plant of the invention has been installed;
figure 4 is a front view of a specially-profiled plate 10 of the invention, not installed;
figure 5 is a schematic axonometric view of the surface of an incline with a landslide occurring, on which the consolidating plant of the invention has been installed, in a further embodiment which is particularly suitable for irregular inclines.

### BEST MODE FOR CARRYING OUT THE INVENTION

With particular reference to the figures, 1 denotes in its entirety a plant for consolidating regular slopes at risk of landslide. More specifically, a preferred embodiment of the invention is illustrated herein below, which is particularly suitable for performing consolidation operation on regularly-stratified slopes consisting of granular or cohesive land, in the particular selected case with the use of cables.

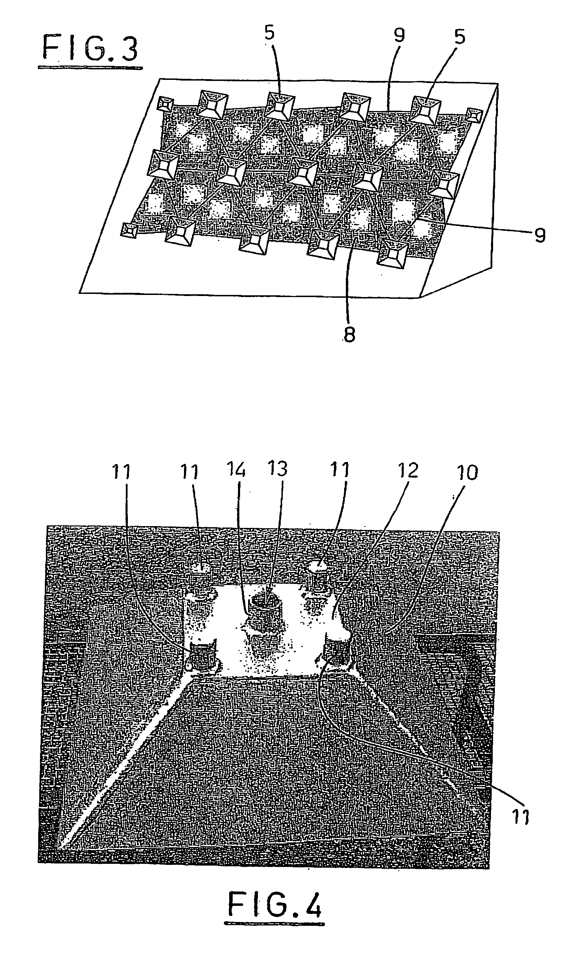

The plant 1 firstly involves a "remodelling of the slope" to give a three-dimensional volume to it by creating modelling recesses 5 with simple manual excavation, fashioning truncopyramidal or overturned truncoconical-shaped recesses, obviously also using natural ones if present. A plant thus-predisposed exhibits a plurality of profiled reliefs 6 fashioned on the terrain, the walls of which reliefs 6 lead down into the modelling recesses (see figure 3). All intermediate concave zones between the recesses have to be eliminated so that the net and cables (if any) once tightened on the bottom of the recesses strongly compress the terrain without leaving any empty spaces, so that a novel and very effective "three-dimensional brake" is created, which will be illustrated herein below.

A plurality of holes 2 is bored internally and preferably at the centre of the modelling recesses 5, which holes 2 are predisposed preferably perpendicular to the slope face and are made sufficiently deep such as to reach an underlying stable layer H of bedrock 3.

The arrangement of the modelling recesses 5 and therefore also of the anchoring holes 2 is selected according to the depth of the unstable layer. For depths of below 1.5 metres it is preferable to use a quincunx array (the profile of which fits the morphology of the face), horizontally bored such as to create, together with the cables, an active containing grid having a triangular mesh; for greater depths it is advisable to decide for an array of the anchoring means which is in non-alternated vertical and possibly also horizontal lines. This results, given a same number of anchorings (although obviously deeper) in a compressing mesh with a greater cable density (about a third more) arranged quadrangularly, which enables a broader application of the active forces, made necessary by the greater instability of the unstable layer.

The holes 2 are destined to house respective anchoring means 4 essentially comprising an anchoring bar 7 preferably made of threaded steel and of an adequate length. The bar 7 is introduced in a hole 2 up until it sufficiently penetrates the stable layer of rock, and is definitively blocked in position by an injection of cement into the hole 2.

The plant comprises at least a steel-wire meshed net 8 destined to be stretched on the slope face, properly tensioned and solidly fastened to the anchoring means 4 by means of a plurality of specially-profiled plates 10 which will be coupled to respective modelled recesses 5. In particular, the plates 10 are constituted by an overturned trunco-pyramidal steel plate exhibiting a base surface 12 which faces towards the bottom of the recess 5 when the plate 10 is set in place. The base surface 12 bears, at a periphery thereof, in particular at corners thereof, four gripping pins 11 of the net which pins distribute the grip of the plate on four meshes of the net and not on one alone as happens in the prior art, and exhibit a protection sleeve 14 which increases the ease of sliding of the cables in the interests of a better tensioning operation, as will be more fully described herein below. During mounting, each plate 10 is installed in a respective modelling recess 5, by inserting the end of the threaded bar 7 projecting from the bottom of the recess 5 (and from the previously-laid net) in the plate 10 through the hole 13 and the protection sleeve 14. In this way, the nets 8 previously stretched on the slope face such as to be positioned above the modelling recesses 5 are interposed between the bottom of the plate 10 and the mouth of the recess 5.

The profiled plates 10 and therefore the anchorages 4 are connected to one another by a plurality of steel cables 9 stretched above the nets 8 in a predetermined arrangement which varies, as already mentioned, with the arrangement for the perforations; a) in a quincunx array, with a triangular plan (see also figure 3) or b) in a chessboard fashion, with a quadrangular plan. In particular, the cables 9 have to be mounted such that they rotate about the sleeve 14, and such that each gripping pin 11 of the plate 10 intercepts a mesh of the net 8. The following stage of the method comprises the tensioning take-down: the plate 10 is restrained in the housing thereof by tightening the nut, not illustrated, which is screwed onto the threaded bar 7 and bears down on the plate 10.

The method can comprise the use of forcing means, such as large hammers, which an operative would use to strike the recesses during this tightening operation, with the aim of causing the cables and net to sink into the face, and also in order to balance out the tensions of the various cables which intersect in each single plate (when a cable is more tensioned than the others it is hammered into the face). The depth of the modelling recesses 5 creates very high tensions in the cables, such that a dynamometer wrench is required to measure and adjust the stretching degree. The protection sleeve 14, located at the through-hole 13 position, has the function of preventing contact between the threaded bar 7 and the cables 9 which are interposed between the bottom of the recess 5 and the base 12 of the plate 10. This means that the high tension will not block the cable in the bar-threading and stop it from sliding, pushed by the plate, correctly downwards, thus reaching the desired tension.

The plates 10 can be closed by a respective cover, not illustrated, internally of which some of the technical data relating to the installation can be engraved on a rating plate, for further reference (the length of the bar, the fastening torque of the nut by the dynamometer wrench, the height of the layer of terrain as measured by the operator during the boring operation, the type of mixture chosen for cementing, the number of injections and the presumed quantity of concrete injected, etc.). Alternatively, the plates 10 can simply be covered with earth.

The size of the plates 10 (height, width, thickness) varies according to some predetermined parameters relating to the type of the terrain, the height of the unstable layer, the mesh of the net, etc.

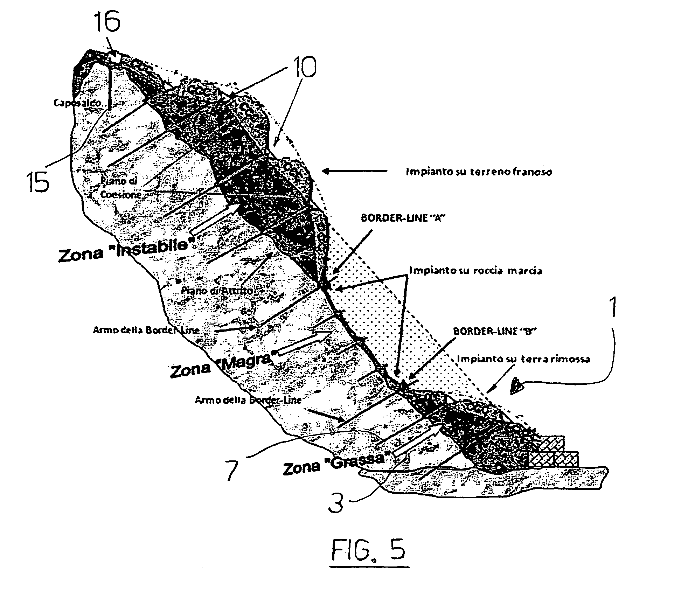

A variant, not illustrated, but in some cases equally apt, is one in which net-reinforcing cables are not used. In the presence of very narrow unstable layers, or in the "thin zones" of irregularly-shaped slopes (figure 5) this variant is very useful even with low-resistance nets. In these plants, the absence of the mechanical containing action of the cables is compensated for by an increase of the parameters of the three-dimensional brake: the depth of the modelling recesses; the size and inclination of the side-profiles of the plates 10; the density of the anchorings. In these cases the plates 10, in the take-down stage, more easily and effectively bring the nets to their stretch limit, as they are not opposed in the tensioning action by the cables, which have a lower index of elasticity.

With layers exhibiting greater instability, from 1 to 2 metres, within certain limits the parameters can be increased, although with these depths it is difficult to see the use of them, in terms of economy, or at the technical or practical levels. Alternatively, high-resistance nets can be used, which are more rigid and which better transmit the thrust of the plate 10 into the terrain, boding well for the balancing of all the parameters in relation to the technical performance of the net.

The modelling recess, in which the plate 10 is inserted, can exhibit, obviously, various conformations, and the plate 10 can and will consequently take on a complementary shape which enables it to be inserted within the recess itself.

The method for laying and the functioning of the plant for consolidating terrain at risk of landslide are now described.

At first the slope is modelled by affording the modelling recesses 5 using simple manual excavating techniques. In particular the recesses 5, arranged in a quincunx array or with non-alternated lines, must be quite deep in order to enable the profiled plate 10 to be laid at the predetermined depth. These recesses are overtumed-trunco-pyramidal (or truncoconical), with the edges thereof lining up with one another such as to avoid creation of concavities which would create empty spaces below the net, but also in order to realise an assembly of convex reliefs 6 with a triangular or quadrangular plan, the shape of which enables total compression thereof by the plant.

Following this operation, at the centre and on the bottom of each recess the holes 2 are bored perpendicular to the line of the slope. The anchorings are then realised, each threaded bar 7 (or a micro-column, a retaining cable, a spiral cable etc.) being laid in a respective hole 2, with injection of specially-mixed cement being made with the aim of solidly blocking each bar 7 in position.

The nets 8 are then laid, positioned such as to surmount each recess without entering. After the nets have been secured, the profiled plates 10 are installed on the respective modelling recesses 5, by inserting them via the central hole on the bars 7 which have been mounted projectingly in order that the plate 10 can be fastened via the nut without compressing the net, leaving the plate suspended, supported in this position by the net. The cables 9 are then tensioned, taken down above the nets 8 and passing them below the already-hooked plates 10 and running them over the sleeve of the plate 10. In particular, in the horizontal quincunx array, the cables 9 are arranged along all the left and right diagonals and along all the horizontal lines, forming the characteristic triangular-mesh grid which perfectly adapts to the edges of the above-mentioned triangular-plan reliefs 6. In the non-alternated vertical-row arrangement, the cables 9 are arranged along all the left and right diagonals and along all the horizontal and possibly also the vertical lines to form a quadrangular mesh with the diagonals intersecting at the centre of the quadrangle, which perfectly adapts to the edges of the above-mentioned quadrangular-plan reliefs 6.

At this point the profiled plates 10 are forced into the modelling recesses 5, as already mentioned, with the innovative take-down method: i.e. by tightening the nuts on the bars 7 with a dynamometer wrench to overcome the resistance of the cables and net and draw them towards the bottom of the modelling recesses up to reaching the predetermined calibration. In particular, the reliefs 6 are in this way solidly compressed by the net and the cables. The knocking-out of the small excavations with a large hammer so that the net can be tightened therein has advantageous technical-functional characteristics: a) it has the effect of rendering the cable tensions, which might otherwise be different, uniform and correct; b) it creates a uniform compression of all the three-dimensional surface of the slope being secured. The thus-obtained three-dimensional brake, incorporated in the terrain itself, takes on the layer of remodelled earth as an active part of the plant, containing the unstable layer between two friction planes. The thus-obtained three-dimensional brake, incorporated in the terrain, takes on the layer of remodelled earth as an active part of the plant, containing the unstable layer between two friction planes like the filling in a sandwich.

An additional technical variant, in the case of thick layers of unstable terrain, is the reinforcement of the first anchoring line, in order to prevent the above-described push-down phenomenon. This reinforcement is obtained with known methods with the use of small columns and straps, or in less risky cases by intensifying the number of anchorages in the first line. With the realisation of this rigid reinforcement it becomes technically possible to provide the plant with sentinel plates 16 for controlling the state of tension of the whole plant. The sentinel plates 16 are interposed between the top anchor 15 and the first anchoring line, and are provided with detecting instruments which signal the tension variations, thus enabling constant monitoring of the plant.

A further embodiment of the invention, shown in figure 5, enables irregular earth slopes at risk of landslide to be consolidated. An irregular slope is one where a risk has already occurred, lacerating the layer of earth and uncovering a part of the slide plane (shown in figure 5 with a dotted line).

In general the dimensions of the three zones (unstable, débris-free, débris-covered) highlighted in figure 5 vary in size and extension, but are always present.

It is interesting to observe how the consolidation of the slopes of this type is used for consolidating the three above-defined types of terrain, which are morphologically very different to one another. An unstable zone is a regular earth slope which must be consolidated as described herein above with reference to regular earth slopes. A débris-free zone is a bedrock face (this is because the terrain has almost totally slipped downwards, leaving the escarpment uncovered - rather than consolidating this zone, as the part to be consolidated has already slipped, it is to be partially protected but mostly restored and replanted somewhat such as to prevent atmospheric agents from beginning an erosion process leading to crumbling. The débris-covered zone exhibits a very high layer of shifted earth, which is layered above the original pre-existing layer and is to be treated with the same criteria as already explained for regular earth slopes, taking into consideration its considerable height and obviously its instability. But the additional aid provided by micro-acting plants on irregular slopes is the technique using border-lines (see figure 5).

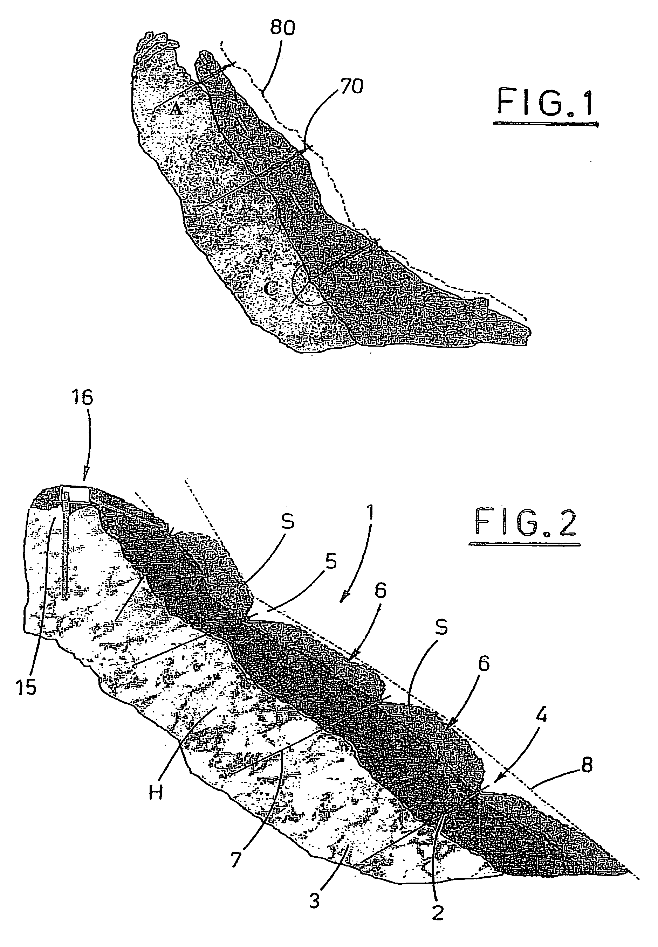

The border-line rigging is of fundamental importance and is done separately, with a greater number of holes being bored, more shallowly than on the earthen slopes, as in this case there is surface rock. Two superposed cables are applied: the first, to be applied before the net, directly on the rock in order to make the net adhere to the base of the landslide front when the nets are lowered; the second above the net as a true and proper rigging. Borderline A (figure 1) constrains the net directly to the rock by denying the above-lying terrain any escape route. This is important for the débris-covered zone because it guarantees that the most critical points are held, while at the same time it has an important function in the débris-free zone, where all the tensions will be unloaded. Borderline B is also very close to the rock face. Experimental analyses have shown that the modelling of the slope with triangular-plan plates or other plates which are fitted into recesses, thus preventing empty spaces below the net, provide an effective three-dimensional brake which can prevent landslides. It has also been observed that from the geotechnical point of view this modelling of the surface layer of the earth subjected uniformly to the considerable structural compressions as described above (cables, net, recesses) gives rise to a consolidated layer of terrain S which is resistant to atmospheric agents for a depth of at least that of the modelling recesses, incorporated into the plant itself of which it becomes a part, lightening the slipping earth layer and reducing the destabilising component of the weight force. Further, the constitution of this compact surface layer, solidly contained in the plant, actively contributes to the consolidation, as it doubles the friction surface that the landslide must overcome in order to fall. Unstable land is contained as if In a sandwich between two friction planes, the first of which is the between the earth and the underlying bedrock, the second being the one created immediately below the modelled layer.

To guarantee this effective action of double friction, the plates, the net and the recesses, if present, must be correctly sunk into the earth and must be strongly tensioned such as to define the mechanical compression action required for creating the consolidated layer S.

The profiled plates, which are an important part of the invention, effectively replace the force-distributing plates of the traditional installations, and thanks to their special three-dimensional form exhibit force components which mechanically oppose the falling motion and support the slope, while the flat two-dimensional force components, parallel to the terrain, of the traditional plates actually push the terrain downwards. The greater dimensions of the profiled plates increase the surface opposing sliding and together with the essential use of the top anchors, in plants on high layers of unstable terrain, collaborate in giving the plant the rigidity which is essential for preventing push-down.

The plant for consolidating terrain at risk of landslide according to the invention enables the cited problems to be resolved, and in particular for the first time prevents the onset of the landslide event instead of allowing the land to slide below the net and contain it further down, which fills out the net and bellies it out up to breaking and leading to the need for considerable repair work of the original plant. Briefly, this result is obtained; a) by remodelling the slope to a volume layout which not only prevents empty spaces below the plant, but also enables, with the modelling recesses, a powerful three-dimensional compression of the whole surface of the terrain to be contained; b) by means of the innovative three-dimensional brake which make landsliding below the net impossible; c) with the innovative profiled plates 10 whose three-dimensional shape supports the slope; d) with the new take-down mounting method which causes the whole plant to perform a compressive mechanical and containing action of the first slope layer; e) with the high pressure of the net on the portions of modelled terrain which determines the formation of a consolidating layer, resistant to atmospheric agents; f) with the novel doubling of the friction surfaces; g) with the guarantee of rigidity of the plant given by the top anchors, against the push-down; h) with the special use of the borderlines (where included), an insuperable barrier against any slippage; i) with the option of vertical movement of the plates which enables the tensioning interventions to be re-performed in order to compensate for the initial losses of tension due to natural or mechanical processes; k) with the possibility of constantly monitoring the plants by means of the specially-positioned sentinel plates.

The vertical movement of the plates further makes possible a periodic control of the tension of the plates and a resetting to a correct tension via a dynamometric wrench. For the first time a possible loosening of the plant is contemplated, due to the considerable volume displacement of the terrain following seasonal change (if they have absorbed much water or not), the stretching index of the cables, if any, due to normal settling of the strands, and the consolidation of the surface layer terrain which has begun as compression causes it to become more compact, reducing its volume. These are elements which initially work together to vary the state of tension and thus the effectiveness.

These characteristics in two-dimensional prior-art plants are not considered as the nets rest on the earth and the cables, if present, are not tensioned towards the slope but only longitudinally and the two-dimensional plates move only slightly and once blocked against the foundation cement of the anchorings become practically ineffective.

With a micro-active plant such as the one illustrated in the present invention, land liable to sliding can be treated with an even greater grip of the three-dimensional brake which is proportional to its height, good-sized profile plates, modelling recesses which are of a depth which is proportional to the depth of the unstable terrain, a very deep take-down and naturally a reinforcement of the first anchoring line.

The above description is made by way of non-limiting example, and any eventual methodological and/or constructional variants fall within the ambit of protection of the present technical solution, as described herein above and as claimed in the following claims.

## Claims

1. A method for consolidating terrain at risk of landslide, **characterised in that** it comprises stages of:
a. remodelling of a slope to give a three-dimensional volume to it by creating modelling recesses (5), so that a plant thus predisposed exhibits a plurality of convex reliefs (6) fashioned on the terrain, the walls of which reliefs (6) lead down into the modelling recesses (5) such that each vertex constituted by edges of the relief (6) is positioned at a modelling recess (5);
b. boring a plurality of holes (2) internally of the modelling recesses (5), the holes (2) having a sufficient length to reach an underlying layer (H) of stable rock, which holes (2) receive respective anchoring means (4);
c. introducing anchoring means (4) into each hole (2), which anchoring means (4) are made fast to the terrain by means of injections of suitable mixtures of cement, such that each anchoring means (4) is solidly blocked in position;
d. spreading at least a net (8) on a surface of the terrain;
e. positioning, in each modelling recess (5), a respective profiled plate (10), coupling the profiled plate (10) with the respective anchoring means (4) in such a way that the net (8) is interposed between a bottom of the recess (5) and the plate (10);
f. tightening fastening means such as to constrain the profiled plate (10) to the anchoring means (4), bringing the profiled plate (10) onto the base of the recess (5) and blocking the net (8) interposed between the base of the recess (5) and the profiled plate (10).

2. The method of claim 1, **characterised in that** it comprises, during stage d), a further stage of: laying a plurality of cables (9) exhibiting a suitable resistance on the terrain, which plurality of cables (9) is superposed on the net (8), the cables being destined to connect with at least a part of the anchoring means (4) and **characterised in that** during stage f) the net (8) and the cables (9) interposed between the base of the recess (5) and the plate (10) are blocked.

3. The method of claim 1 or 2, wherein the anchoring means (4) are constituted by an anchoring bar (7), at least partially threaded at a projecting end thereof located in the modelling recess (5) and in that the plate (10) comprises a through-hole (13) afforded at a centre of the base which through-hole (13) is destined, during stage e), to receive the projecting portion of the anchoring bar (7).

4. The method of claim 1 or 2 or 3, **characterised in that** it comprises, before stage a), a further stage of:
a1) predisposing, upstream of a first line of anchoring means (4), a pre-line constituted by a row of oversized non-flexible top anchors (15) to which the first line of anchoring means (4) is rigidly connected.

5. An arrangement for consolidating terrain at risk of landslide, **characterised in that** it comprises:
a plurality of modelling recesses (5) created so that the plant (1) involves a remodelling of a slope to give a three-dimensional volume to the slope itself, the plant so predisposed thus exhibiting a plurality of profiled convex reliefs (6) fashioned on the terrain, the walls of which reliefs (6) lead down into the modelling recesses (5) such that each vertex constituted by edges of the relief (6) is positioned at a modelling recess (5);
a plurality of holes (2) predisposed on the terrain, internally of the modelling recesses (5), sufficiently deep to reach an underlying stable layer of rock (3), which plurality of holes (2) is destined to house respective anchoring means (4);
a plurality of anchoring means (4), destined to be introduced into a respective hole (2) up to reaching a stable layer of rock (3), and destined to be definitively blocked in position by means of an injection of a mixture of cement materials into the hole (2);
at least a net (8), destined to be spread on the surface of the slope, suitably tensioned and solidly constrained to the anchoring means (4);
a plurality of profiled plates (10), destined to be coupled to a respective modelling recess (5) and fixed in position by fastening means (8) interposed between the bottom of the recess (5) and the profiled plate (10).

6. An arrangement according to the preceding claim, comprising a plurality of cables (9) stretched above the net (8), destined to create an interconnection between at least a part of the anchoring means (4).

7. An arrangement according to claim 5 or 6, wherein the anchoring means (4) are constituted by bars (7) which are at least partly threaded.

8. An arrangement according to claim 7, **characterised In that** each profiled plate (10) is constituted by a plate (10), preferably made of steel and complementarily shaped with respect to the modelling recess (5), the plate (10) exhibiting a base surface (12) which faces towards the bottom of the recess (5) when the plate (10) is put into working position, the base surface (12) affording, preferably at a centre thereof, a through-hole (13) destined to receive a terminal end of the threaded bar (7), projecting into the recess (5).

9. An arrangement according to claim 8, **characterised In that** the base surface (12) peripherally exhibits respective blocking pins (11), destined to engage with meshes of the net (8).

10. An arrangement according to claim 7 or 8 or 9, **characterised In that** the base surface (12) exhibits a protection sleeve (14) at the hole (13).

11. An arrangement according to one of claims from 5 to 9, **characterised In that** the holes (2) are preferably arranged along lines which are parallel to one another.

12. An arrangement according to one of claims from 5 to 11, **characterised in that** each of the modelling recesses (5) is overturned-truncoconically fashioned and is destined to receive a respective and complementarily-shaped profiled plate (10).

13. An arrangement according to one of claims from 7 to 12 and of claim 6, **characterised In that** the cables (9) connect the anchoring means (4), arranged diagonally and horizontally.

14. An arrangement according to one of claims from 5 to 13, **characterised In that** it comprises, upstream of the first anchoring line (4), a pre-line constituted by a row of oversized non-flexible top anchors (15) to which the first line of anchoring means (4) is rigidly connected.

15. An arrangement according to one of the preceding claims, **characterised in that** it comprises sentinel plates (16), associated to the top anchors (15), and detecting instruments, associated to the sentinel plates (16) in order to control the tensioning to which the cables of the sentinel plates (16) is subjected.

## Patentansprüche

1. Verfahren zur Stabilisierung eines erdrutschgefährdeten Geländes, **dadurch gekennzeichnet, dass** es folgende Schritte umfasst:
a. Umgestalten eines Hangs, um ihm ein räumlich-plastisches Volumen zu geben, und zwar durch Schaffen von Form verleihenden Vertiefungen (5), sodass eine hierdurch prädisponierte Anordnung mehrere konvexe Reliefs (6) aufweist, die in dem Gelände ausgebildet sind, wobei die Wände dieser Geländereliefs (6) so in die Form verleihenden Vertiefungen (5) hinunter führen, dass sich jeder Scheitel, der von Flanken des Geländereliefs (6) gebildet wird, in einer Form verleihenden Vertiefung (5) befindet;
b. Bohren von mehreren Löchern (2) innerhalb der Form verleihenden Vertiefungen (5), wobei die Löcher (2) eine ausreichende Länge haben, um eine tiefer liegende Schicht (H) stabilen Gesteins zu erreichen, und entsprechende Verankerungsmittel (4) aufnehmen;
c. Einbringen von Verankerungsmitteln (4) in jedes Loch (2), wobei diese Verankerungsmittel (4) durch Einspritzen von geeigneten Zementmischungen im Boden befestigt werden, derart, dass jedes Verankerungsmittel (4) an seiner Verwendungsstelle fest eingebaut ist;
d. Ausbreiten mindestens eines Netzes (8) an der Oberfläche des Geländes;
e. Anordnen, in jeder Form verleihenden Vertiefung (5), einer entsprechenden profilierten Platte (10), Verbinden der profilierten Platte (10) mit den entsprechenden Verankerungsmitteln (4), derart, dass das Netz (8) zwischen dem Boden der Vertiefung (5) und der Platte (10) angeordnet ist;
f. Festziehen der Befestigungsmittel, derart, dass die profilierte Platte (10) an die Verankerungsmittel (4) gepresst wird, wodurch die profilierte Platte (10) auf den Grund der Vertiefung (5) gebracht wird und das zwischen der Grundfläche der Vertiefung (5) und der profilierten Platte (10) angeordnete Netz (8) fixiert.

2. Verfahren nach Anspruch 1, **dadurch gekennzeichnet, dass** es während des Schritts d) einen weiteren Schritt umfasst, nämlich das Verlegen mehrerer Seile (9), die eine für das Gelände geeignete Festigkeit aufweisen, wobei die mehreren Seile (9) in Überlagerung des Netzes (8) angeordnet werden und dafür bestimmt sind, mit mindestens einem Teil der Verankerungsmittel (4) verbunden zu werden, und **dadurch gekennzeichnet, dass** während des Schritts f) das Netz (8) und die Seile (9), die zwischen der Grundfläche der Vertiefung (5) und der Platte (10) angeordnet sind, fixiert werden.

3. Verfahren nach Anspruch 1 oder 2, wobei die Verankerungsmittel (4) von einem Verankerungsstab (7) gebildet werden, der an seinem vorstehenden Ende, das sich in der Form verleihenden Vertiefung (5) befindet, zumindest teilweise mit Gewinde versehen ist, und wobei die Platte (10) im Zentrum ihrer Grundfläche ein Durchgangsloch (13) aufweist, das dafür bestimmt ist, während des Schritts e) den vorstehenden Teil des Verankerungsstabs (7) aufzunehmen.

4. Verfahren nach Anspruch 1 oder 2 oder 3, **dadurch gekennzeichnet, dass** es vor dem Schritt a) einen weiteren Schritt umfasst, nämlich:
a1) vorausgehendes Anordnen, oberhalb einer ersten Linie von Verankerungsmitteln (4), einer vorausgehende Linie, gebildet von einer Reihe überdimensionierter, unelastischer oberer Anker (15), mit denen die erste Linie von Verankerungsmitteln (4) starr verbunden wird.

5. Anordnung zur Stabilisierung eines erdrutschgefährdeten Geländes, **dadurch gekennzeichnet, dass** sie Folgendes umfasst:
mehrere Form verleihende Vertiefungen (5), die derart beschaffen sind, dass die Anordnung (1) mit einer Umgestaltung eines Hangs einhergeht, um ihm ein räumlich-plastisches Volumen zu geben, wobei die Anordnung so prädisponiert wird, dass sie mehrere profilierte konvexe Reliefs (6) aufweist, die in dem Gelände ausgebildet sind, wobei die Wände dieser Geländereliefs (6) so in die Form verleihenden Vertiefungen (5) hinunter führen, dass sich jeder Scheitel, der von Flanken des Geländereliefs (6) gebildet wird, in einer Form verleihenden Vertiefung (5) befindet;
mehrere in dem Gelände innerhalb der Form verleihenden Vertiefungen (5) angeordnete Löcher (2), die tief genug sind, um eine tiefer liegende stabile Gesteinsschicht (3) zu erreichen, wobei diese mehreren Löcher (2) dafür bestimmt sind, entsprechende Verankerungsmittel (4) aufnehmen;
mehrere Verankerungsmittel (4), die dafür bestimmt sind, in ein entsprechendes Loch (2) eingebracht zu werden, bis sie eine stabile Gesteinsschicht (3) erreichen, und dafür bestimmt sind, an ihrer Verwendungsstelle durch Einspritzen eines Gemischs aus Zementstoffen in das Loch (2) fest verankert zu werden;
mindestens ein Netz (8), das dafür bestimmt ist, an der Oberfläche des Hangs ausgebreitet, in geeigneter Weise gespannt und an den Verankerungsmitteln (4) fest eingespannt zu werden;
mehrere profilierte Platten (10), die dafür bestimmt sind, mit einer entsprechenden Form verleihenden Vertiefung (5) gepaart und mit zwischen dem Boden der Vertiefung (5) und der profilierten Platte (10) angeordneten Befestigungsmitteln (8) an ihrer Verwendungsstelle befestigt zu werden.

6. Anordnung nach dem vorhergehenden Anspruch, mehrere Seile (9) umfassend, die über dem Netz (8) gespannt und dafür bestimmt sind, zwischen zumindest einem Teil der Verankerungsmittel (4) eine Querverbindung zu schaffen.

7. Anordnung nach Anspruch 5 oder 6, wobei die Verankerungsmittel (4) von Stäben (7) gebildet werden, die zumindest teilweise mit Gewinde versehen sind.

8. Anordnung nach Anspruch 7, **dadurch gekennzeichnet, dass** jede profilierte Platte (10) von einer Platte (10) gebildet wird, die vorzugsweise aus Stahl hergestellt ist und komplementär zu der Form verleihenden Vertiefung (5) geformt ist, wobei die Platte (10) eine Grundfläche (12) besitzt, die dem Boden der Vertiefung (5) zugewandt ist, wenn die Platte (10) in Arbeitsstellung gebracht ist, wobei die Grundfläche (12) - vorzugsweise im Zentrum - ein Durchgangsloch (13) aufweist, das dafür bestimmt ist, ein Ende des mit Gewinde versehenen Stabs (7), der in die Vertiefung (5) vorsteht, aufzunehmen.

9. Anordnung nach Anspruch 8, **dadurch gekennzeichnet, dass** die Grundfläche (12) am Rand entsprechende Haltestifte (11) aufweist, die dafür bestimmt sind, mit den Maschen des Netzes (8) in Eingriff zu gelangen.

10. Anordnung nach Anspruch 7 oder 8 oder 9, **dadurch gekennzeichnet, dass** die Grundfläche (12) in dem Loch (13) eine Schutzhülse (14) aufweist.

11. Anordnung nach einem der Ansprüche 5 bis 9, **dadurch gekennzeichnet, dass** die Löcher (2) vorzugsweise entlang von Linien angeordnet sind, die parallel zueinander sind.

12. Anordnung nach einem der Ansprüche 5 bis 11, **dadurch gekennzeichnet, dass** jede der Form verleihenden Vertiefungen (5) umgestürzt-kegelstumpfförmig ist und dafür bestimmt ist, eine entsprechende profilierte Platte (10) komplementärer Form aufzunehmen.

13. Anordnung nach einem der Ansprüche 7 bis 12 und nach Anspruch 6, **dadurch gekennzeichnet, dass** die Seile (9) die diagonal und horizontal angeordneten Verankerungsmittel (4) verbinden.

14. Anordnung nach einem der Ansprüche 5 bis 13, **dadurch gekennzeichnet, dass** sie oberhalb der ersten Verankerungslinie (4) eine Vor-Linie umfasst, gebildet von einer Reihe überdimensionierter, unelastischer oberer Anker (15), mit denen die erste Linie Verankerungsmittel (4) starr verbunden ist.

15. Anordnung nach einem der vorhergehenden Ansprüche, **dadurch gekennzeichnet, dass** sie Indikatorplatten (16) umfasst, die den oberen Ankern (15) zugeordnet sind, und Indikator-Messgeräte, die den Indikatorplatten (16) zugeordnet sind, um die Spannung zu überwachen, der die Seile der Indikatorplatten (16) ausgesetzt sind.

## Revendications

1. Un procédé de consolidation d'un terrain menacé par un glissement de terrain, **caractérisé en ce qu'**il comprend les phases consistant à:
a. remodeler une pente pour lui donner un volume tridimensionnel en créant des cavités de modelage (5), de façon à ce qu'un aménagement ainsi prédisposé présente une pluralité de reliefs convexes (6) réalisés sur le terrain, les parois desdits reliefs (6) descendant pour déboucher dans les cavités de modelage (5) de façon à ce que chaque sommet défini par des bords du relief (6) se trouve au niveau d'une cavité de modelage (5) ;
b. percer une pluralité de trous (2) à l'intérieur des cavités de modelage (5), les trous (2) ayant une longueur suffisante pour atteindre une couche sous-jacente (H) de roche stable, lesdits trous (2) étant destinés à recevoir des moyens d'ancrage (4) respectifs ;
c. introduire les moyens d'ancrage (4) dans chaque trou (2), lesdits moyens d'ancrage (4) étant fixés au terrain par le biais d'injections de mélanges appropriés de ciment, de façon à ce que les moyens d'ancrage (4) soient solidement bloqués en position ;
d. déployer au moins un grillage (8) sur une surface du terrain ;
e. positionner, dans chaque cavité de modelage (5), une plaque profilée (10) respective, en accouplant ladite plaque profilée (10) avec les moyens d'ancrage (4) respectifs de façon à ce que le grillage (8) soit interposé entre un fond de la cavité (5) et la plaque (10) ;
f. serrer des moyens de fixation de façon à assujettir la plaque profilée (10) aux moyens d'ancrage (4), en amenant la plaque profilée (10) sur la base de la cavité (5) et en bloquant le grillage (8) interposé entre la base de la cavité (5) et la plaque profilée (10).

2. Le procédé selon la revendication 1, **caractérisé en ce qu'**il comprend, pendant la phase d), une autre phase consistant à : placer sur le terrain une pluralité de câbles (9) de résistance adéquate, ladite pluralité de câbles (9) étant superposée sur le grillage (8), et lesdits câbles étant destinés à être reliés à au moins une partie des moyens d'ancrage (4), et **caractérisé en ce que**, pendant la phase f), le grillage (8) et les câbles (9) interposés entre la base de la cavité (5) et la plaque (10) sont bloqués.

3. Le procédé selon la revendication 1 ou 2, **caractérisé en ce que** les moyens d'ancrage (4) sont constitués par une barre d'ancrage (7), au moins partiellement filetée au niveau d'une extrémité saillante située dans la cavité de modelage (5), et **en ce que** la plaque (10) comprend un trou débouchant (13) situé au centre de la base, ledit trou débouchant (13) étant destiné, pendant la phase e), à recevoir la partie saillante de la barre d'ancrage (7).

4. Le procédé selon la revendication 1 ou 2 ou 3, **caractérisé en ce qu'**il comprend, avant la phase a), une autre phase consistant à :
a1) prédisposer, en amont d'une première ligne de moyens d'ancrage (4), une avant-ligne constituée par une rangée de systèmes d'ancrage supérieurs (15), surdimensionnés et non flexibles, auxquels la première ligne de moyens d'ancrage (4) est reliée de façon rigide.

5. Un aménagement pour consolider un terrain menacé par un glissement de terrain, **caractérisé en ce qu'**il comprend :
une pluralité de cavités de modelage (5) réalisées de façon à ce que l'aménagement (1) prévoit le remodelage d'une pente pour donner à ladite pente un volume tridimensionnel, l'aménagement ainsi prévu présentant une pluralité de reliefs convexes profilés (6) réalisés sur le terrain, les parois desdits reliefs (6) descendant pour déboucher dans les cavités (5) de façon à ce que chaque sommet défini par des bords du relief (6) se trouve au niveau d'une cavité de modelage (5) ;
une pluralité de trous (2) pratiqués sur le terrain, à l'intérieur des cavités de modelage (5), suffisamment profonds pour atteindre une couche sous-jacente stable de roche (3), ladite pluralité de trous (2) étant destinée à loger des moyens d'ancrage (4) respectifs ;
une pluralité de moyens d'ancrage (4), destinés à être introduits dans un trou (2) respectif jusqu'à atteindre une couche stable de roche (3), et destinés à être définitivement bloqués en position par le biais d'une injection d'un mélange de matériaux cimentaires dans le trou (2);
au moins un grillage (8), destiné à être déployé sur la surface de la pente, opportunément tendu et solidement assujetti aux moyens d'ancrage (4);
une pluralité de plaques profilées (10), destinées à être accouplées avec une cavité de modelage (5) respective et fixées en position par des moyens de fixation (8) interposés entre le fond de la cavité (5) et la plaque profilée (10).

6. L'aménagement selon la revendication précédente, comprenant une pluralité de câbles (9) étendus sur le grillage (8), destinés à créer une interconnexion entre au moins une partie des moyens d'ancrage (4).

7. L'aménagement selon la revendication 5 ou 6, **caractérisé en ce que** les moyens d'ancrage (4) sont constitués par des barres (7) qui sont au moins partiellement filetées.

8. L'arrangement selon la revendication 7, **caractérisé en ce que** chaque plaque profilée (10) est constituée d'une plaque (10), réalisée de préférence en acier et conformée de façon complémentaire par rapport à la cavité de modelage (5), la plaque (10) présentant une surface de base (12) qui est orientée vers le fond de la cavité (5) quand la plaque (10) est placée en position opérationnelle, la surface de base (12) présentant, de préférence en son centre, un trou débouchant (13) destiné à recevoir une extrémité terminale de la barre filetée (7), saillant dans la cavité (5).

9. L'aménagement selon la revendication 8, **caractérisé en ce que** la surface de base (12) présente, sur son pourtour, des goupilles de blocage (11) respectives, destinées à venir en prise avec des mailles du grillage (8).

10. L'aménagement selon la revendication 7 ou 8 ou 9, **caractérisé en ce que** la surface de base (12) présente un manchon de protection (14) au niveau du trou (13).

11. L'aménagement selon les revendications de 5 à 9, **caractérisé en ce que** les trous (2) sont disposés de préférence le long de lignes qui sont parallèles entre elles.

12. L'aménagement selon une des revendications de 5 à 11, **caractérisé en ce que** chacune des cavités de modelage (5) a une forme troncoconique renversée et est destinée à recevoir une plaque profilée (10) respective de forme complémentaire.

13. L'aménagement selon une des revendications de 7 à 12 et selon la revendication 6, **caractérisé en ce que** les câbles (9) relient les moyens d'ancrage (4), disposés diagonalement et horizontalement.

14. L'aménagement selon une des revendications de 5 à 13, **caractérisé en ce qu'**il comprend, en amont de la première ligne d'ancrage (4), une avant-ligne constituée par une rangée de systèmes d'ancrage supérieurs (15), surdimensionnés et non flexibles, auxquels la première ligne de moyens d'ancrage (14) est reliée de façon rigide.

15. L'aménagement selon les revendications précédentes, **caractérisé en ce qu'**il comprend des plaques sentinelles (16), associées aux systèmes d'ancrage supérieurs (15), et des instruments de détection, associés aux plaques sentinelles (16) de façon à contrôler la tension à laquelle sont soumis les câbles des plaques sentinelles (16).
